# EUROPÄISCHE PATENTANMELDUNG

(11) **EP 0 890 561 A2**
(43) Veröffentlichungstag der Anmeldung: **13.01.1999**
(21) Anmeldenummer: 98112631.1
(22) Anmeldetag: 08.07.1998
(51) Int. Cl.: C05F 3/06, C05F 3/00

(54) **Mobile Anlage zur Aufbereitung von Gülle**

(30) Priorität: 10.07.1997 DE 19731177
(71) Anmelder: UFI-TEC Institut für Membrantechnologie GmbH, 16515 Oranienburg (DE)
(72) Erfinder: Wunderlich, Wolf-Dietrich Dr. sec., 16556 Borgsdorf (DE); Borgwardt, Jörg Dr. rer. nat., 16515 Oranienburg (DE)
(74) Vertreter: Diener, Tilla

(57) **Zusammenfassung**

Die Erfindung betrifft eine mobile Anlage zur Aufbereitung von vorseparierter Gülle unter Einsatz der Ultrafiltration (UF) und Umkehrosmose (UO) für den Einsatz in landwirtschaftlichen Betrieben mit kleinem oder mittlerem Tierbestand oder als mobile Verarbeitungsanlage für die Entsorgung von Gülle in Gemeinden mit Einzelviehhaltung.

Erfindungsgemäß besteht die Anlage aus einem Normcontainer, in welchem auf einem Haltegerüst auf einer Containerseite das UF-System und auf der anderen Seite das UO-System installiert sind. Das UF-System besteht aus den Speisepumpen mit den erforderlichen Regelvorrichtungen und dem mit Rohrmembranen bestückten UF-Modulsystem für die Vor- und die Endkonzentrierung, welche über Rohrkrümmer mit einem austauschbarem Rohrsystem verbunden sind.
Das UO-System, in welchem Wärmetauscherelemente integriert sind, besteht aus zwei Modulblöcken mit den entsprechenden Verbindungselementen, den Speisepumpen und einer Säuredosiereinheit. Zur Entfernung des bei der Säuerung entstehenden CO₂ sind in den Filtrat- und Konzentraträumen Entlüftungssysteme installiert.

## Beschreibung

Die Erfindung betrifft eine mobile Anlage zur Aufbereitung von vorseparierter Gülle für den Einsatz in landwirtschaftlichen Betrieben oder als mobile Verarbeitungsanlage.

Zur Aufbereitung von Gülle und anderen biologischen Abwässern und Schlämmen sind bereits eine Vielzahl von Verfahren beschrieben und Vorrichtungen dazu vorgestellt worden. Dabei handelt es sich vorwiegend um stationär betriebene Anlagen, die in unmittelbarer Nähe von Großviehanlagen errichtet werden.

So wird nach der DE-OS 39 05 265 Dünngülle, die nach Abtrennung des Feststoffanteils durch Filtration erhalten wird, auf einen pH-Wert von 11 bis 14,2 eingestellt und dann Eisen- oder Aluminiumionen in einer solchen Menge zugegeben, daß ein Ausflocken erfolgt. Die ausgeflockten Feststoffe werden vom Überstand getrennt und der Überstand mit bekannten Verfahren weiter aufgearbeitet. Nachteilig bei diesem Verfahren ist, daß der pH-Wert mehrfach neu eingestellt werden muß, wodurch der Aufwand an zuzugebenden Chemikalien, die wieder als Abfall entsorgt werden müssen, sehr hoch ist.

In der DE-OS 39 28 815 wird ein Verfahren zur Behandlung von Biomassen, u.a. von Gülle, vorgestellt, bei dem die Biomasse nach einer Vorbehandlung in einer Temperatur-Druck-Hydrolyse in der Flüssigphase bei 150 bis 300 ° C, ggf. unter Anwendung von anorganischen Katalysatoren, wie Ca, Na und K, behandelt wird, wobei eine Restmasse als Festphase und eine mit monomeren Wertstoffen angereicherte Flüssigphase anfällt.

Durch die Wirkungsweise der Hydrolyse und Anwendung anorganischer Katalysatoren werden die Biopolymere eines Biomasseschlammes abgebaut. Parallel zu der in der wäßrigen Lösung stattfindenden Hydrolyse verläuft die Umwandlung der in der Roh-Biomasse akkumulierten Schwermetalle in wasserlösliche Verbindungen und deren Lösung in das Hydrolysat. Die Auftrennung dieses Hydrolysates erfolgt in einem Membransystem mit der Cross-Flow-Filtration und der Umkehrosmose, wobei die Schwermetalle und die Salze aufkonzentriert werden.

Der Nachteil dieses Verfahrens besteht in dem hohen Energiebedarf für die Temperatur-Druck-Hydrolyse in der Flüssigphase sowie weiteren Separations- und Filtrationsschritten für die Hydrolysataufbereitung. Hinzu kommt, daß durch die bei der Hydrolyse auftretende Desamierung und Decarboxylierung von Aminosäuren, Proteiden, Lipiden und Polynucleotiden Ammoniak und Kohlendioxyd gebildet wird, die in die Luft entweichen können und somit wertvolle Inhaltsstoffe für die Düngemittelgewinnung verloren gehen.

Die DE-PS 42 12 196 beschreibt ein Verfahren zur kontinuierlichen Verarbeitung von Rohgülle, in dessen Gerätekonfiguration UF-Impulsreaktoren zur Aufkonzentrierung der Gülle für die nachfolgende Umkehrosmose eingesetzt sind. Diese UF-Impulsreaktoren sind mit semipermeablen Rohrmembranen ausgestattet, die einen Rohrquerschnitt von etwa 14 mm und einen cut-off-Wert von 80000 aufweisen. Die kontinuierliche Schaltung des UF-Impulsreaktors ermöglicht die Anhebung des Trockensubstanzgehaltes der Dünngülle im Verhältnis 1 : 2. Der konstruktive Aufbau eines solchen UF-Impulsreaktors ist in dem DE-Gbm 94 12 709 beschrieben. Danach besteht dieser aus einer Injektionskammer, einer Güllezuführungsleitung, Druck- und Zirkulationspumpe sowie einer Entspannungs- und einer Beschleunigungskammer. Zwischen Entspannungs- und Beschleunigungskammer ist ein Rohrmodul mit Filtermembranen und ein Filtratabgang angeordnet.

Organisches Filtermaterial, z.B. Weizenstroh, zur Filtration von Gülle kommt gemäß der DE-OS 42 20 947 zum Einsatz. Weitere Verfahren und Vorrichtungen zur Aufbereitung von Prozeßabwässern mittels Ultrafiltration sowie Herstellungsverfahren für verschiedene Rohrmembranen sind aus den DE-OS 40 22 738, 40 37 329, 43 08 404, 43 12 426 und 44 03 652 bekannt, bei denen der Einsatz für die Aufarbeitung von Gülle nicht gesondert hervorgehoben ist.

Der Erfindung liegt die Aufgabe zugrunde, die gattungsgemäße mobile Gülleaufbereitungsanlage durch spezielle technische Veränderungen bisher bekannter Verarbeitungsanlagen so zu gestalten, daß die Gülle vollständig durch partielle, fraktionierte Konzentrierung der Inhaltsstoffe zu Kompost, flüssigem Düngemittelkonzentrat und Brauchwasser aufgearbeitet wird, wobei durch Anordnung Ausbildung und Bemessung der einzelnen Verarbeitungsstufen sichergestellt ist, daß die Gesamtanlage innerhalb eines vergleichsweise kleineren Bauraumes aufstellbar und somit weiterhin mobil einsetzbar ist.

Diese Aufgabe wird mit den kennzeichnenden Merkmalen des Hauptanspruches gelöst. Weitere vorteilhafte Ausgestaltungen der Erfindung sind in den Unteransprüchen gekennzeichnet.

Der Vorteil der Erfindung besteht darin,
- daß die erfindungsgemäße Anlage mobil einsetzbar ist,
- kein Leistungsabfall der Anlage bei Konzentrierung und
   Dauerbetrieb der Anlage eintritt,
- gegenüber bekannten stationären Aufbereitungskomplexen
   geringere Investitionskosten verursacht werden und somit
- auch die Entsorgung von Gülle in Gemeinden mit Einzelviehhaltung aus dort vorhandenen Stapelbehältern erfolgen kann.

Die Erfindung soll nachfolgend anhand eines Ausführungsbeispieles näher erläutert werden. In den zugehörigen Zeichnungen zeigt
Fig. 1 Verfahrensschema UF-Anlage
Fig. 2 Verfahrensschema UO-Anlage
Fig. 3 Darstellung der UF-Anlage
Fig. 4 Darstellung der UO-Anlage

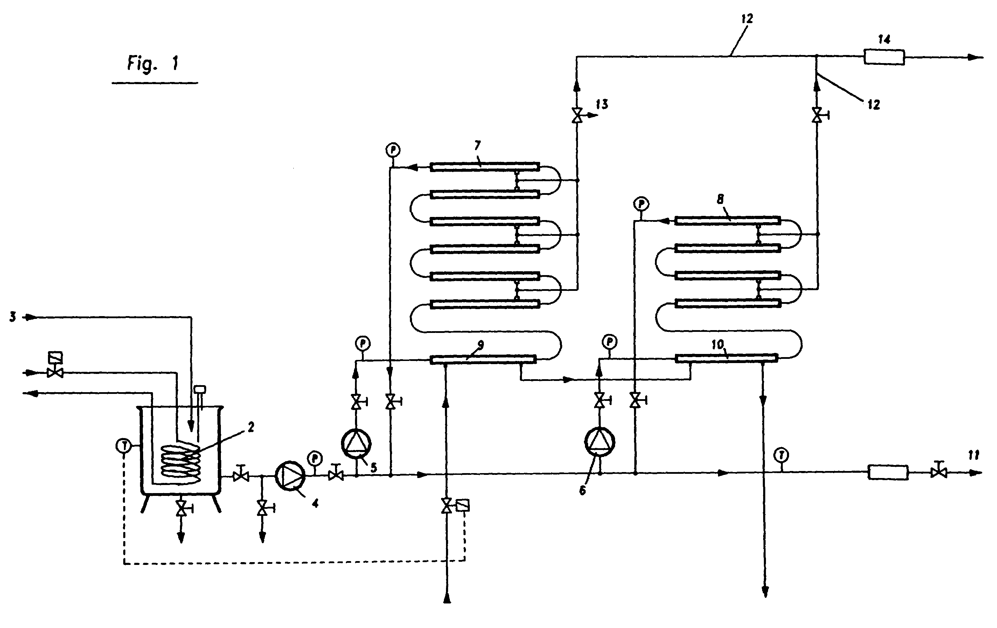

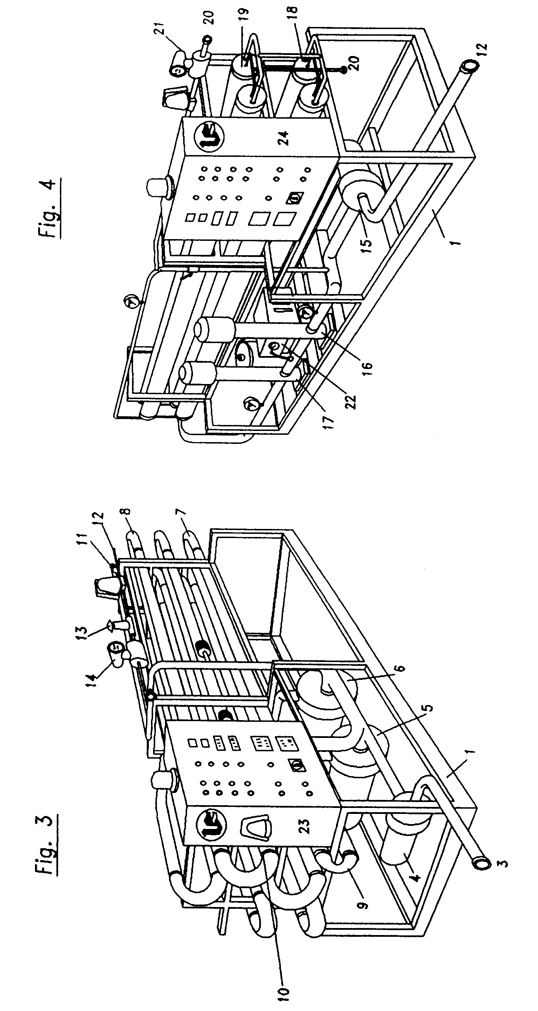

Die erfindungsgemäße Gülleaufbereitungsanlage besteht aus einem bekannten Normcontainer (in den Zeichnungen nicht dargestellt), in welchem beidseitig ein Haltegerüst 1 angeordnet ist, auf welchem auf der einen Containerseite ein UF-System (siehe Fig. 1 und 3), bestehend aus einem Pumpensystem, das UF-Speisepumpen 4, 5 und 6 mit erforderlichen Regeleinrichtungen beinhaltet, und ein UF-Modulsystem als Modulblock 7 für eine Vorkonzentrierung und Modulblock 8 für eine Endkonzentrierung angeordnet sind.

Die Modulblöcke 7, 8 sind über Rohrkrümmer mit einem austauschbaren Rohrsystem, das die wahlweise Verwendung unterschiedlicher Module gestattet (z.B. 19-Kanal-Rohrbündelmodule), sowie mit einem Wärmetauscher 9 für Modulblock 7 und einem Wärmetauscher 10 für Modulblock 8 verbunden.
Die Ableitung des Konzentrates 11 erfolgt zur externen Weiterverarbeitung.
Die Filtratableitung/Produktzufuhr 12 erfolgt über ein Entlüftungssystem 13 und Mengenmesser 14 zu einem UO-System als Filtratableitung/Produktzufuhr 12.

Das Filtratsystem ist mittels einer UO-Permeatableitung mit einer Säuredosiereinheit 22 verbunden, die "filtratgesteuert" ist.

Die Gesamtanlage ist mit Meß- und Regeleinrichtungen für Druck, Temperatur, Niveau, Durchfluß und Filtratraumrückspülung ausgerüstet, die über einen UF-Schaltschrank 23 bedien- und regelbar sind.

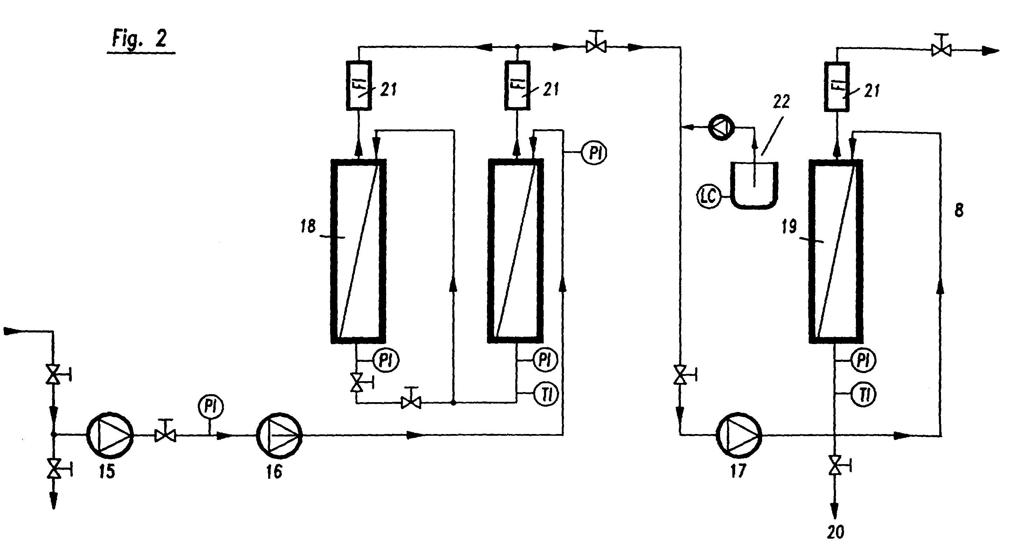

Auf der der UF-Anlage gegenüberliegenden Containerseite ist auf dem Haltegerüst 1 das UO-System installiert (siehe Fig. 2 und 4).

Im UO-System ist ein Pumpensystem, bestehend aus UO-Speisepumpe 15,
Hochdruckpumpe 16 für Modulblock 18 und Hochdruckpumpe 17 für Modulblock 19 mit erforderlichen Regeleinrichtungen angeordnet.

Das UO-Modulsystem, in welches Wärmetauscherelemente integriert sind, besteht aus den zwei Modulblöcken 17 und 18 mit entsprechenden Verbindungselementen, die einen Austausch der UO-Module gegen gleiche oder andere Modultypen gestatten und beinhaltet weiterhin die Säuredosiereinheit 22. Die Konzentratableitung 20 mit Mengenmesser erfolgt in einen externen Sammelbehälter, die Permeatableitung 21 mit Mengenmesser erfolgt in einen Wasserbehälter zur Brauchwassernutzung oder in die Kanalisation.

Entsprechend dem Einsatzort, Art und Menge der zu verarbeitenden Gülle und des Aktivierungszieles gelangt frische Rinder- und/oder Schweinegülle oder fermentierte Gülle aus Biogasreaktoren nach herkömmlicher Vorabtrennung der groben Partikel, z.B. durch Preßschneckenseperatoren oder Filtereinrichtungen, in einen niveaugesteuerten Vorlaufbehälter 2 der UF-Anlage und wird mittels der Speisepumpe 4 dem ein- oder zwei-stufigen Modulsystem 7, 8 zugeführt. Hierbei erfolgt eine Aufkonzentrierung der festen, suspendierten und hochmolekularen Inhaltsstoffe und die Abtrennung einer salzhaltigen Lösung, die neben anorganischen Salzen auch niedermolekulare organische Verbindungen, wie Stoffwechselabbauprodukte, enthält.

Das UF-Modulsystem ist bestückt mit Rohrmembranen, z.B
- 19-Kanal-Rohrbündelmodul mit 1/2"-Polymermembranen,
- 1"-Polymermembranen oder
- Keramik-Rohrmembranen.

Daneben ist auch die Anwendung von Plattenmodulsystemen mit Spaltbreiten über 2 mm möglich. Die Rohrmodulsysteme sind leicht gegeneinander austauschbar.

Die erste UF-Modulstufe 7 wird mittels der UF-Zirkulationspumpe 5 mit einer Geschwindigkeit von mehr als 4 m/s überströmt. Die erforderliche Geschwindigkeit hängt in entscheidendem Maße von der Konzentration der Inhaltsstoffe und damit von der Viskosität der Gülle ab.

Nach Durchfließen der ersten Modulstufe 7, in der eine Konzentration von max. 10 % mit einer Kreiselpumpe, der Zirkulationspumpe 5, erreicht wird, wird dieses Konzentrat mit der Zirkulationspumpe 6 der zweiten UF-Modulstufe 8 zur Hochkonzentrierung zugeführt.

Bei mehrstufigen UF-Modulsystemen wird die Endkonzentration bekannterweise erst in der letzten Stufe erreicht. Im dargelegten Beispiel werden mittels einer Pumpe für hochviskose Medien, z.B. Verdrängerpumpe oder Kreiskolbenpumpe, der Zirkulationspumpe 6, die Gülleinhaltsstoffe von bis zu 10 % auf ca. 18 - 20 % aufkonzentriert. Bei einer Konzentration über ca. 15 % wird die Drehzahl der Pumpe und damit die Überströmung soweit gesenkt, daß Reynolds-Zahlen von < 2000 auftreten.

Bei diesen Strömungsbedingungen wird die Ablagerung von Feststoffen auf der Membranoberfläche (fouling, scaling) weitgehend verhindert, wodurch gleichbleibend hohe Filtratströme über einen langen Verarbeitungszeitraum gewährleistet werden.

Die bei herkömmlichen Mikrofiltrationsanlagen auftretenden Ablagerungen von Salzkristallen im Filtratraum, z.B. aus Magnesium-Ammonium-Phosphat, werden verhindert, indem im Filtratraum durch eine impulsartige, zeitgesteuerte Säurespülung die Ausbildung von Kristallkeimen weitgehend verhindert wird.

Die impulsartige Säurespülung über die Säuredosiereinheit 22 mit UO-Permeat aus der UO-Permeatableitung 21 wird periodisch bei Abfall der Filtratleistung als filtratgesteuerte Säurespülung oder in zeitlich periodischen Abständen durchgeführt, wobei als Säuren organische Säuren wie z.B. Essigsäure oder anorganische Säuren, wie Salpeter- oder Phosphorsäure, verwendet werden.

Sich bei der Filtratraumspülung durch Umsetzung der Salze mit der zugefügten Säure bildendes CO₂ wird über ein Entlüftungssystem 13 abgeleitet.

Dieses Entlüftungssystem 13 in Konzentrat- und Filtraträumen gewährleistet, daß bei Durchdringen des CO₂ durch die Membran die Ausbildung von hydrophilen Grenzschichten auf der Membran und damit verbunden eine Reduzierung der Filtratleistung eintritt.

Die Wärmeaustauschersysteme 9, 10 in der UF-Anlage halten die Betriebstemperatur bei optimalen Bedingungen, z.B. 40° C, während der Ultrafiltration konstant.

Durch das Filtratraumrückspülsystem und die Temperaturoptimierung wird ein Selbstreinigungseffekt der Membranoberfläche über einen langen Betriebszeitraum erreicht.

Das bei der UF anfallende dickflüssige Konzentrat wird über die Konzentratableitung 11 aus dem Container abgeführt und extern in einem Mischaggregat mit leicht kompostierbaren Materialien, wie Stroh, Torf, Papier, kommunale Abfälle u.a., so vermischt, daß nach herkömmlicher Technologie eine Kompostierung erfolgen kann.

Die UF-Anlage wird durch eine Meß- und Regeltechnikanlage geregelt, die einen weitgehend beaufsichtigungsfreien Betrieb hinsichtlich
- niveaugesteuerter Zufuhr der Gülle,
- Abschaltung der Anlage bei Produktmangel,
- Temperaturregelung zur Einhaltung optimaler konstanter Filtrationstemperaturen,
- Regelung der Durchflußmenge, Säurezufuhr und Entlüftung sowie
- Rückführung des Filtrates in den Vorlaufbehälter bei
   Leistungsabfall der Anlage

gewährleistet. Die erforderliche Meß- und Regeltechnik ist vom jeweiligen Bedarfsfall abhängig und individuell anpaßbar. Das UF-Filtrat und das bei der Filtratraumspülung anfallende saure Permeat werden gemeinsam dem UO-System zugeführt.

Das UO-System besteht aus Platten oder Spiralmodulen mit einer Spaltbreite, die eine optimale Überströmung gewährleistet, vorzugsweise
- 1,5 - 2,0 mm bei Plattenmmodulen und
- 1,0 - 1,5 mm bei Wickelmodulen.

Die Strömungsgeschwindigkeit wird vorzugsweise bei
- Plattenmodulen über 2,0 - 4 m/s, bei
- Wickelmodulen bei ca. 1,5 - 2 m/s
   eingestellt.

Als Membranen werden vorzugsweise Polymere eingesetzt, die eine hohe NH₄⁺-Rückhaltung aufweisen.

Zur Durchführung des UO-Prozesses wird das Filtrat der Ultrafiltration über die Abführung 12 mittels der UO-Speisepumpe 15 in den Kreislauf des UO-Moduls 18 eingespeist. Mittels der Hochdruckpumpe 16 wird der erforderliche Systemdruck von z.B. 30 - 40 bar aufgebaut und die Lösung über den Membranen mit einer Geschwindigkeit von 1,5 - 3,5 m/s zirkuliert, bis die gewünschte Endkonzentration erreicht ist.

In dieser ersten UO-Stufe werden Trockensubstanzgehalte von 2,5 - 4,0 % erreicht. Werden höhere Konzentrationen gefordert, ist eine zweite UO-Konzentrierungsstufe anzuwenden. Dazu wird das in der ersten Stufe anfallende Permeat, ggf. nach einer weiteren Säureregulierung, auf pH < 6 im permeatgestuften Prozeß einer weiteren UO-Behandlung unterworfen, um einleitfähiges Wasser mit CSB-Werten < 100 und NH₄⁺-Werten < 10 zu erhalten. Die hierbei anfallende konzentrierte Lösung geht in die erste UO-Stufe zur Weiterbehandlung zurück.

Bei der Konzentratstufung des Prozesses wird das Konzentrat der ersten UO-Stufe von ca. 2,5 - 3,5 % TS (TS = Trockensubstanz) auf 5 - 6 % TS aufkonzentriert, um besser handhabbare, konzentrierte Düngemittelkonzentrate zu bekommen.

Die Säureregulierung der UO-Lösungen erfolgt mittels der Säuredosiereinheit 22 auf pH-Werte < 6, um eine weitgehende Ammonium-Rückhaltung der Membranen zu erreichen und gleichzeitig die Ablagerung von Salzkristallen, besonders Magnesiumammoniumphosphat (MgNHPO₄) zu verhindern.

Während bei pH 9 noch ca. 200 mg/l NH₄ die Membranen passieren, werden bei pH < 3, bedingt durch die Verrschiebung des NH₄⁺⇄ NH₃⁺ ⇄+ H⁺ - Gleichgewichtes, Ammoniumkonzentrationen von < 2 mg/l erreicht.

Wird das Permeat der UO zu Verregnungszwecken benutzt, kann die Säureregulierung analog zur UF zeit- und durchflußgesteuert zur Verhinderung der Kristallbildung in Filtrat- und Konzentraträumen eingesetzt werden. Analog zur Ultrafiltration sind im Filtrat- und Konzentratraum der UO-Systeme Entlüftungssysteme 13 zum Entfernen des bei der Säuerung entstehenden CO₂ installiert.

Das Konzentrat aus der UO-Anlage wird in externe Lagerbehälter gefördert und kann als natürliches Spezialdüngemittel für verschiedene Kulturpflanzen eingesetzt werden, z.B. im biologischen Gartenbau oder zur Erhöhung der Qualität bzw. zur Konfektionierung von Kompost verwendet werden.

Auch die UO-Anlage ist, wie bereits für die UF-Anlage ausgesagt, für einen weitgehend beaufsichtigungsfreien Betrieb mit Meß- und Regeleinrichtungen versehen, die für die
- niveaugesteuerte Zufuhr des Gülle-Ultrafiltrates,
- Abschaltung der Anlage bei Produktmangel,
- Temperaturregelung zur Einhaltung optimaler, konstanter
   Filtrationstemperaturen,
- Regelung der Durchflußmenge, Säurezufuhr, Entlüftung sowie
- Permeatwasserspülung und Abschaltung der Gesamtanlage
   programmierbar gestaltet sind.

### Aufstellung der verwendeten Bezugszeichen

- 1: Haltegerüst
- 2: Vorlagebehälter (nicht dargestellt)
- 3: Güllezuführungsleitung
- 4: Speisepumpe zum UF-System
- 5: Zirkulationspumpe I
- 6: Zirkulationspumpe II
- 7: UF-Modulblock I
- 8: UF-Modulblock II
- 9: Wärmetauscher (UF-Block I)
- 10: Wärmetauscher (UF-Block II)
- 11: Konzentratableitung
- 12: Filtratableitung/Produktzufuhr
- 13: Entlüftungssystem
- 14: UF-Filtratmengenmesser
- 15: UO-Speisepumpe
- 16: Hochdruckpumpe UO-Block I
- 17: Hochdruckpumpe UO-Block II
- 18: UO-Modulblock I
- 19: UO-Modulblock II
- 20: UO-Konzentratableitung mit Mengenmesser
- 21: UO-Permeatableitung mit Mengenmesser
- 22: Säuredosiereinheit
- 23: Schaltschrank UF
- 24: Schaltschrank UO

## Patentansprüche

1. Mobile Anlage zur Aufbereitung von vorseparierter Gülle mit Separiereinrichtung(en), Gerüst(en), Pumpe(n), Rohrleitung(en), Meß- und Regeleinrichtung(en) usw. für den Einsatz in landwirtschaftlichen Betrieben mit kleinem und mittlerem Tierbestand oder als mobile Verarbeitungsanlage für die Entsorgung von Gülle in Gemeinden mit Einzelviehhaltung aus entsprechenden Vorstapelbehältern, dadurch gekennzeichnet, daß die Anlage unter Einsatz von Ultrafiltration UF und Umkehrosmose UO aus einem Normcontainer besteht, in welchem beidseitig ein Haltegerüst (1) angeordnet ist, auf welchem auf der einen Containerseite das UF-System, bestehend aus einem Pumpensystem, das UF-Speisepumpen (4), (5) und (6) mit den erforderlichen Regeleinrichtungen beinhaltet, und einem UF-Modulsystem als Modulblock (7) für die Vorkonzentrierung und Modulblock (8) für die Endkonzentrierung angeordnet sind,
daß die Modulblöcke (7, 8) über Rohrkrümmer mit einem austauschbaren Rohrsystem, das die wahlweise Verwendung unterschiedlicher Modulblöcke (7, 8) gestattet, sowie mit einem Wärmetauscher (9) für Modulblock (7) und einem Wärmetauscher (10) für den zweiten Modulblock (8) verbunden sind,
daß die Ableitung des Konzentrates (11) zur externen Weiterverarbeitung und die Filtratableitung/Produktzufuhr (12) zum UO-System erfolgt,
daß die Gesamtanlage mit Meß- und Regeleinrichtungen für Druck, Temperatur, Niveau, Durchfluß und Filtratraumrückspülung ausgerüstet ist, die über einen UF-Schaltschrank (23) bedien- und regelbar sind,
daß auf der der UF-Anlage gegenüberliegenden Containerseite auf dem Haltegerüst (1) das UO-System installiert ist, in welchem ein Pumpensystem, bestehend aus einer UO-Speisepumpe (15), einer Hochdruckpumpe (16) für einen weiteren Modulblock (18) und einer Hochdruckpumpe (17) für noch einen weiteren Modulblock (19) mit den erforderlichen Regeleinrichtungen, ein UO-Modulsystem, in welches Wärmetauscherelemente integriert sind, bestehend aus den Modulblöcken (17), (18) mit entsprechenden Verbindungselementen, die einen Austausch der UO-Module gegen gleiche oder andere Modultypen gestatten, sowie eine Säuredosiereinheit (22) angeordnet sind,
daß das UF-Modulsystem mit Rohrmembranen, z.B. 19-Kanal-Rohrbündelmodul mit 1/2"-Polymermembranen, 1"-Polymermembranen, Keramik-Rohrmembranen oder Plattensystemen mit Spaltbreiten über 2 mm, ausgerüstet ist,
daß die Konzentratableitung (11) mit Mengenmessung in einen externen Sammelbehälter, eine Permeatableitung (20) mit Mengenmessung in einen Wasserbehälter zur Brauchwassernutzung oder in die Kanalisation erfolgt und das dickflüssige Konzentrat über die Konzentratableitung (11) abgeführt wird und extern in einem Mischaggregat mit leicht kompostierbaren Materialien vermischbar ist, so daß es nach bekannten Technologien kompostierbar oder als natürliches Spezialdüngemittel verwendbar ist.

2. Mobile Anlage zur Aufbereitung von Gülle nach Anspruch 1, dadurch gekennzeichnet, daß im Filtratraum des UF-Systems durch eine impulsartige, zeitgesteuerte Säurespülung mit UO-Permeat mittels der Säuredosiereinheit (22) Ablagerungen von Salzkristallen vermeidbar sind und daß sich durch Umsetzung der Salze mit der zugefügten Säure bildendes CO₂ über ein Entlüftungssystem (13) ableitbar ist.

3. Mobile Anlage zur Aufbereitung von Gülle nach Anspruch 1, dadurch gekennzeichnet, daß im Filtrat- und Konzentratraum des UO-Systemes Entlüftungssysteme (13) zum Entfernen von bei der Säuerung entstehenden CO₂ installiert sind.
